# EUROPEAN PATENT APPLICATION

(11) **EP 1 900 994 A1**
(43) Date of publication of application: **19.03.2008**
(21) Application number: 06767804.5
(22) Date of filing: 04.07.2006
(51) Int. Cl.: F17C 1/00, B60K 15/03, H01M 8/00, H01M 8/04

(54) **PRESSURE CONTAINER**

(30) Priority: 05.07.2005 JP 2005196007
(71) Applicant: SHOWA DENKO KABUSHIKI KAISHA, Tokyo 105-8518 (JP)
(72) Inventor: KAWAMATA, Yasuji c/o SHOWA DENKO K.K., Oyama-shi, Tochigi 3238678 (JP)
(74) Representative: Boura, Olivier
(86) International application number: PCT/JP2006/313273
(87) International publication number: WO 2007/004630

(57) **Abstract**

A pressure vessel is configured such that a plurality of liners 1 are juxtaposed with one another. Each liner 1 includes a tubular trunk 4, and end plates 5 for closing opposite end openings of the tubular trunk 4. Two adjacent liners 1 are integrally connected together via a connection member 2 provided therebetween. The interiors of the integrally connected two adjacent liners 1 communicate with one another via a communication path 3 formed in the liners 1 and in the connection member 2. The ends of connection-member-forming projections 16 provided respectively on the two adjacent liners 1 are butt-joined together, thereby forming the connection member 2. The two adjacent liners 1 have respective through-holes 17 extending from the inner surfaces of the two adjacent liners to the ends of the connection-member-forming projections 16, and the through-holes 17 of the two adjacent liners 1 establish communication therebetween, thereby forming the communication path 3. This pressure vessel can be installed without generation of dead space, can implement a large capacity, and can be reduced in material cost and weight.

## Description

### TECHNICAL FIELD

The present invention relates to a pressure vessel for storing hydrogen gas or natural gas, which serve as fuels for generation of power, to a pressure vessel for storing oxygen gas, or to a like pressure vessel, for use in the automobile industry, the housing industry, the aerospace industry, the healthcare industry, etc.

Herein and in the appended claims, the term "aluminum" encompasses aluminum alloys in addition to pure aluminum.

### BACKGROUND ART

In recent years, in order to abate air pollution by automobile exhaust gas and the like, development of natural gas vehicles and fuel cell vehicles, whose exhaust gas is clean, has been proceeding. These vehicles carry pressure vessels which contain natural gas and hydrogen gas, which serve as fuels, under high pressure.

A conventionally known pressure vessel of this type includes a liner composed of a cylindrical trunk and end plates, which close opposite end openings of the trunk. Specifically, the liner includes a first liner component member and two second liner component members (refer to, for example, Patent Document 1). The first liner component member is a cylindrical aluminum extrudate whose opposite ends are open, and serves as the trunk. The second liner component members are aluminum die-cast members having a substantially dome-like shape and are welded to respective end portions of the first liner composition member so as to serve as the end plates.

In the pressure vessel disclosed in Patent Document 1, the liner is reinforced with a fiber-reinforced resin layer, which includes a helically-wound-fiber-reinforced resin layer and a hoop-wound-fiber-reinforced resin layer. Reinforcing fiber is wound on the liner along the longitudinal direction of the first liner component member in such a manner as to extend between the two second liner component members and is impregnated with epoxy resin for fixation, thereby forming the helically-wound-fiber-reinforced resin layer. Reinforcing fiber is wound on the first liner component member along the circumferential direction and is impregnated with epoxy resin for fixation, thereby forming the hoop-wound-fiber-reinforced resin layer.

Meanwhile, in application to automobiles, in order to lengthen the cruising range, an increase in the capacity of a pressure vessel is demanded. In order to increase the capacity of the pressure vessel disclosed in Patent Document 1, the diameter and the length of the trunk may be increased. However, since a limitation is imposed on the width of an automobile, a limitation is imposed on increasing the length of the trunk. Thus, the diameter of the trunk must be increased for increasing the capacity of the pressure vessel. However, increasing the diameter of the trunk leads to a failure to effectively use an available space in an automobile. Carrying the pressure vessel in an automobile generates a dead space, thereby impairing ride comfort in the automobile. Also, increasing the diameter of the trunk requires an increase in the height of an automobile, so that such a pressure vessel cannot be used in an automobile of low height, such as sedan.

Therefore, a fuel tank device which solves the above problem has been proposed (refer to Patent Document 2). The fuel tank device includes a plurality of tanks and a communication plate. Each of the tanks includes a closed-bottomed tubular tank body, whose one end is open and whose other end is closed, and a cover member for closing the opening of the tank body. The communication plate has mounting through-holes whose number is equal to that of the tanks and into which open end portions of the tank bodies and the cover members are fitted respectively. The communication plate and the cover members of the tanks are friction-stir-welded together, thereby establishing communication between two adjacent tanks via communication holes formed in circumferential walls of the tank bodies and a communication hole formed in the communication plate.

However, the fuel tank device disclosed in Patent Document 2 uses the communication plate having the mounting through-holes whose number is equal to that of the tanks and into which open end portions of the tank bodies and the cover members are fitted respectively. Thus, the material cost and the weight of the fuel tank device increase accordingly. Patent Document 1: Japanese Patent Application Laid-Open (kokai) No. 9-42595
Patent Document 2: Japanese Patent Application Laid-Open (kokai) No. 2004-17669

### DISCLOSURE OF THE INVENTION

### PROBLEMS TO BE SOLVED BY THE INVENTION

An object of the present invention is to provide a pressure vessel which can be installed without generation of dead space, can implement a large capacity, and can be lower in material cost and lighter in weight as compared with the fuel tank device disclosed in Patent Document 2.

### MEANS FOR SOLVING THE PROBLEMS

To achieve the above object, the present invention comprises the following modes.

1) A pressure vessel comprising a plurality of liners juxtaposed with one another, each liner comprising a tubular trunk, and end plates for closing opposite end openings of the tubular trunk, two adjacent liners being integrally connected together via a connection member provided therebetween, interiors of the two adjacent liners integrally connected together via the connection member communicating with each other via a communication path formed in the liners and in the connection member.

2) A pressure vessel according to par. 1), wherein ends of connection-member-forming projections provided respectively on the two adjacent liners are butt-joined together, thereby forming the connection member.

3) A pressure vessel according to par. 2), wherein the two adjacent liners have respective through-holes extending from inner surfaces of the two adjacent liners to the ends of the connection-member-forming projections, and the through-holes of the two adjacent liners establish communication therebetween, thereby forming the communication path.

4) A pressure vessel according to par. 2), wherein a closed-bottomed hole is formed in a side surface of the connection member in such a manner as to extend into both of the connection-member-forming projections; the two adjacent liners have respective through-holes extending from inner surfaces of the two adjacent liners to a wall surface of the closed-bottomed hole; a cover is joined to the connection member so as to close an opening of the closed-bottomed hole; and the closed-bottomed hole of the connection member and the through-holes of the two adjacent liners form the communication path.

5) A pressure vessel according to par. 1), wherein a connection-member-forming projection provided on one of the two adjacent liners is joined to the other liner, thereby forming the connection member.

6) A pressure vessel according to par. 5), wherein the one liner has a through-hole extending from an inner surface of the one liner to an end of the connection-member-forming projection; the other liner has a through-hole extending from an inner surface of the other liner to an outer surface of the other liner; and the through-holes of the two adjacent liners establish communication therebetween, thereby forming the communication path.

7) A pressure vessel according to par. 5), wherein a closed-bottomed hole is formed in a side surface of the connection member; the one liner has a first through-hole extending from an inner surface of the one liner to a wall surface of the closed-bottomed hole and a second through-hole extending from an end of the connection-member-forming projection to the wall surface of the closed-bottomed hole; the other liner has a third through-hole extending from an inner surface of the other liner to an outer surface of the other liner; a cover is joined to the connection member so as to close an opening of the closed-bottomed hole; the second and third through-holes establish communication therebetween; and the closed-bottomed hole of the connection member, the first and second through-holes of the one liner, and the third through-hole of the other liner form the communication path.

8) A pressure vessel according to par. 1), wherein connection-member-forming projections provided respectively on the two adjacent liners are joined together by threadingly-engaging means, thereby forming the connection member.

9) A pressure vessel according to par. 8), wherein the two adjacent liners have respective threaded holes, each assuming a through-hole form, extending from inner surfaces of the two adjacent liners to ends of the connection-member-forming projections; an externally threaded member assuming a rodlike form and having a through-hole extending axially is threadingly engaged with the threaded holes; the threaded holes of the two adjacent liners and the through-hole of the externally threaded member form the communication path; and the connection-member-forming projections of the two adjacent liners and the externally threaded member are sealed against each other.

10) A pressure vessel according to par. 9), wherein the threaded hole of one liner and the threaded hole of the other liner differ in helical direction of threading; the externally threaded member has an outward flange at its longitudinally central portion; portions of the externally threaded member which are located on opposite sides of the outward flange differ in helical direction of threading; the portion of the externally threaded member which is located on one side of the outward flange is threadingly engaged with the threaded hole of the one liner, whereas the other portion of the externally threaded member which is located on the other side of the outward flange is threadingly engaged with the threaded hole of the other liner; and respective seal members intervene between opposite faces of the outward flange and the ends of the connection-member-forming projections of the two adjacent liners.

11) A pressure vessel according to par. 1), wherein all the liners collectively form a single closed space, and a single port portion is provided for establishing communication between the closed space and the exterior of the closed space.

12) A fuel cell system comprising a fuel hydrogen gas storage pressure vessel, a fuel cell, and pressure piping for sending fuel hydrogen gas therethrough to the fuel cell from the fuel hydrogen gas storage pressure vessel, the fuel hydrogen gas storage pressure vessel comprising the pressure vessel according to par. 1).

13) A fuel cell vehicle carrying the fuel cell system according to par. 12).

14) A cogeneration system comprising the fuel cell system according to par. 12).

15) A natural gas supply system comprising a natural gas storage pressure vessel, and pressure piping for delivering natural gas therethrough from the natural gas storage pressure vessel, the natural gas storage pressure vessel comprising the pressure vessel according to par. 1).

16) A cogeneration system comprising the natural gas supply system according to par. 15), a generator, and a generator drive apparatus.

17) A natural gas vehicle comprising the natural gas supply system according to par. 15) and a natural-gas-fueled engine.

18) An oxygen gas supply system comprising an oxygen gas storage pressure vessel, and pressure piping for delivering oxygen gas therethrough from the oxygen gas storage pressure vessel, the oxygen gas storage pressure vessel comprising the pressure vessel according to par. 1).

### EFFECT OF THE INVENTION

According to the pressure vessel of par. 1), a plurality of liners are juxtaposed with one another, each liner comprising a tubular trunk, and end plates for closing opposite end openings of the tubular trunk. Two adjacent liners are integrally connected together via a connection member provided therebetween. The interiors of the two adjacent liners integrally connected together via the connection member communicate with each other via a communication path formed in the liners and in the connection member. Thus, by means of appropriately modifying the diameter and length of vessel component members and the arrangement of all the vessel component members according to an available space of an apparatus; for example, an automobile, in which the pressure vessel is to be installed, the pressure vessel can be installed without generation of dead space, and a large capacity can be implemented. Since two adjacent liners are integrally connected together via the connection member provided therebetween, as compared with the fuel tank device disclosed in Patent Document 2 which uses the communication plate having the mounting through-holes whose number is equal to that of the tanks and into which open end portions of the tank bodies and the cover members are fitted respectively, material cost becomes lower, and weight can be reduced.

According to the pressure vessel of par. 2), the ends of the connection-member-forming projections provided respectively on the two adjacent liners are butt-joined together, thereby forming the connection member. Thus, as compared with the fuel tank device disclosed in Patent Document 2 which uses the communication plate having the mounting through-holes whose number is equal to that of the tanks and into which open end portions of the tank bodies and the cover members are fitted respectively, material cost becomes significantly lower, and weight can be greatly reduced.

According to the pressure vessel of par. 3) or 4), in the pressure vessel of par. 2), the communication path can be formed relatively easily.

According to the pressure vessel of par. 5), the connection-member-forming projection provided on one of the two adjacent liners is joined to the other liner, thereby forming the connection member. Thus, as compared with the fuel tank device disclosed in Patent Document 2 which uses the communication plate having the mounting through-holes whose number is equal to that of the tanks and into which open end portions of the tank bodies and the cover members are fitted respectively, material cost becomes significantly lower, and weight can be greatly reduced.

According to the pressure vessel of par. 6) or 7), in the pressure vessel of par. 5), the communication path can be formed relatively easily.

According to the pressure vessel of par. 8), the connection-member-forming projections provided respectively on the two adjacent liners are joined together by the threadingly-engaging means, thereby forming the connection member. Thus, as compared with the fuel tank device disclosed in Patent Document 2 which uses the communication plate having the mounting through-holes whose number is equal to that of the tanks and into which open end portions of the tank bodies and the cover members are fitted respectively, material cost becomes significantly lower, and weight can be greatly reduced.

According to the pressure vessel of par. 9), in the pressure vessel of par. 8), the communication path can be formed relatively easily.

According to the pressure vessel of par. 10), the portions of the externally threaded member which are located on opposite sides of the outward flange can be simultaneously threadingly engaged with the respective threaded holes of the two adjacent liners.

### BEST MODE FOR CARRYING OUT THE INVENTION

Embodiments of the present invention will next be described with reference to the drawings. Like sections or components throughout all the drawings are denoted by like reference numerals, and repeated description thereof is omitted.

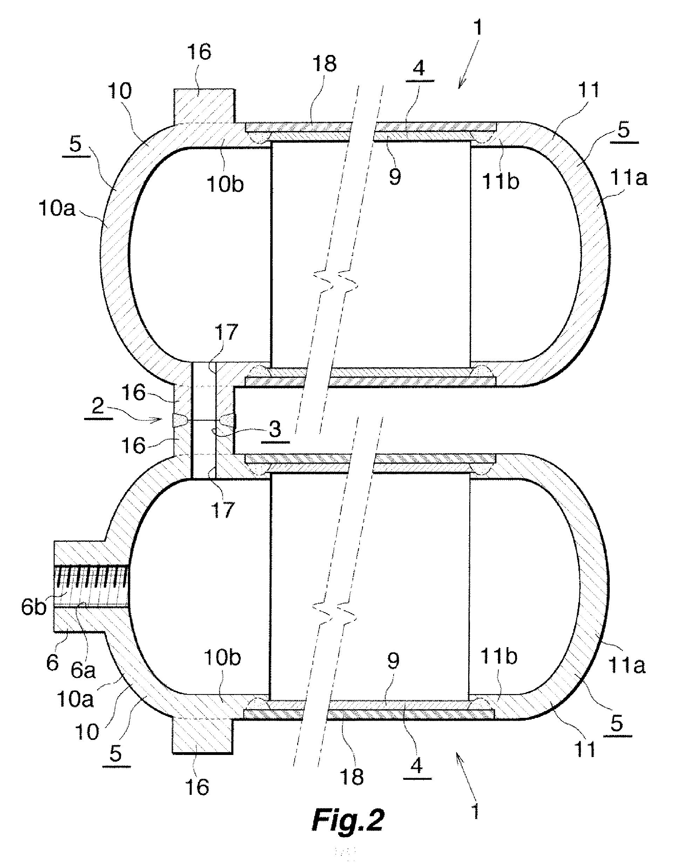

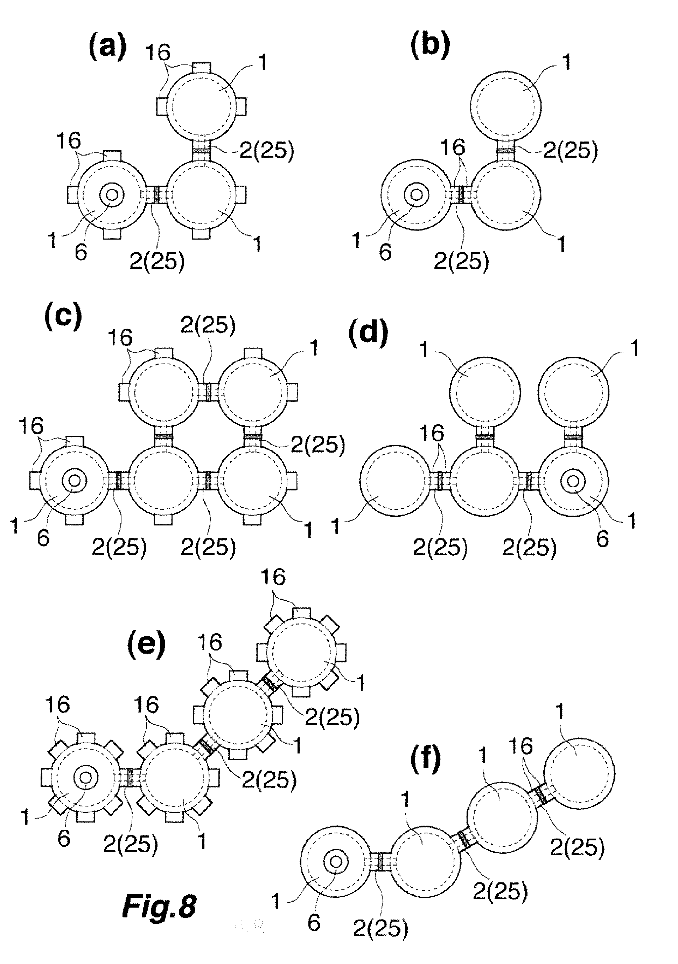

In the following description, the left-hand and right-hand sides of FIG. 2 (the front and the back of paper on which FIG. 8 appears) are referred to as "left" and "right," respectively. The lower side of FIG. 2 (the right-hand side of FIG. 8) is referred to as "front," and the opposite side is referred to as "rear." The front and the back of paper on which FIG. 2 appears (the upper and lower sides of FIG. 8) are referred to as "upper" and "lower," respectively.

### Embodiment 1

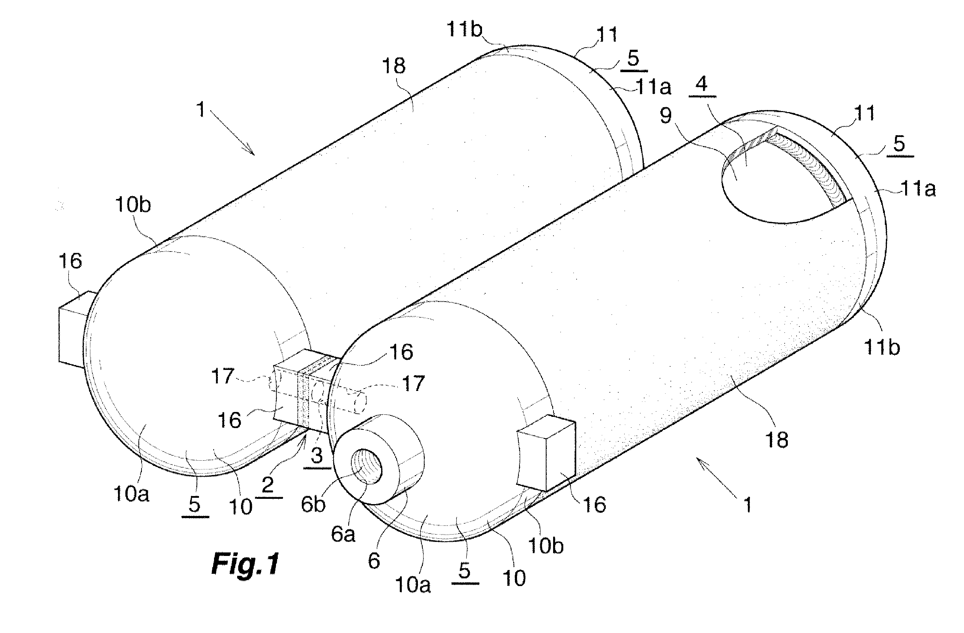

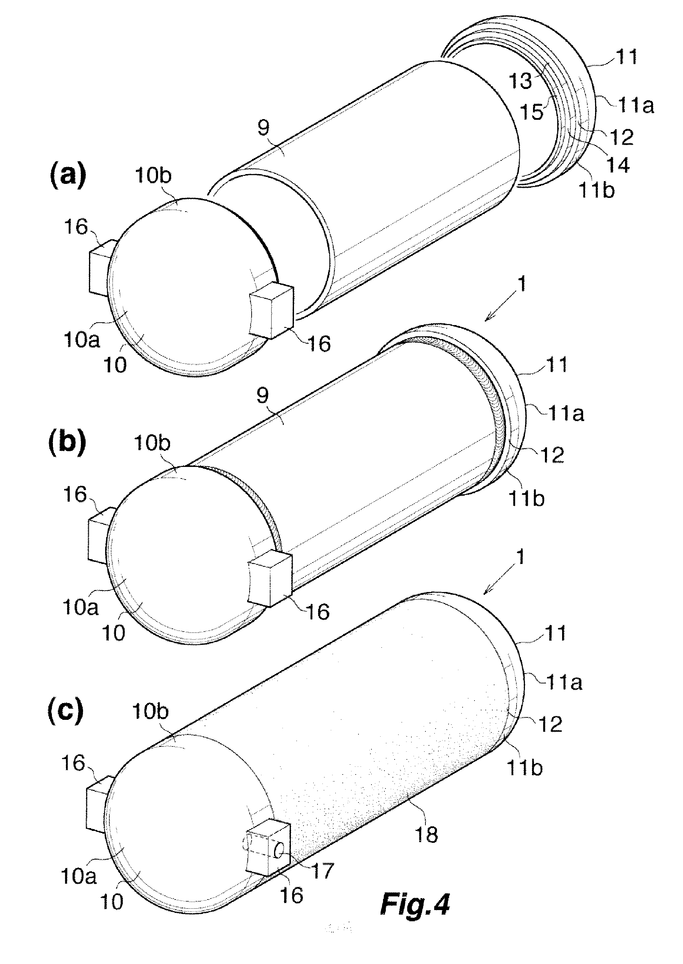

The present embodiment is shown in FIGS. 1 to 4. FIGS. 1 to 3 show a pressure vessel, and FIG. 4 shows a method of manufacturing the pressure vessel.

In FIGS. 1 and 2, the pressure vessel has a plurality of aluminum liners 1 which are juxtaposed in the front-rear direction such that the axes of the liners 1 extend in the left-right direction and lie on the same horizontal plane. The two adjacent liners 1 are integrally connected together via a connection member 2. The interiors of the two adjacent liners 1 which are integrally connected together via the connection member 2 communicate with each other via a communication path 3 formed in the liners 1 and in the connection member 2, whereby all the liners 1 collectively form a single closed space.

The liner 1 includes a cylindrical trunk 4 and partially spherical end plates 5 for closing the respective end openings of the trunk 4. One end plate 5 of any one of the liners 1 has an integrally formed port portion 6. The port portion 6 has a through-hole 6a extending from its outer end. An internal thread 6b is formed on the wall surface of the through-hole 6a.

Each liner 1 includes a first liner component member 9 made of aluminum, and second and third liner component members 10 and 11 made of aluminum. The first liner component member 9 is a straight, cylindrical member having opposite end openings and serve as the most of the trunk 4. The second and third liner component members 10 and 11 are substantially domelike members, are connected to respective opposite end portions of the first liner component member 9, and serve as opposite end portions of the trunk 4 and as the end plates 5. The first liner component member 9 is formed by, for example, hot extrusion. The second liner component members 10 and 11 are formed by, for example, hot forging. The second liner component member 10 (11) includes a partially spherical portion 10a (11a), which serves as the end plate 5, and a short, cylindrical portion 10b (11b), which is continuous with an open end portion of the partially spherical portion 10a (11a) and serves as an end portion of the trunk 4. The partially spherical portions 10a and 11a and the short, cylindrical portions 10b and 11b are thicker than the first liner component member 9. The port portion 6 is integrally formed at the partially spherical portion 10a of the second liner component member 10 of any one of the liners 1.

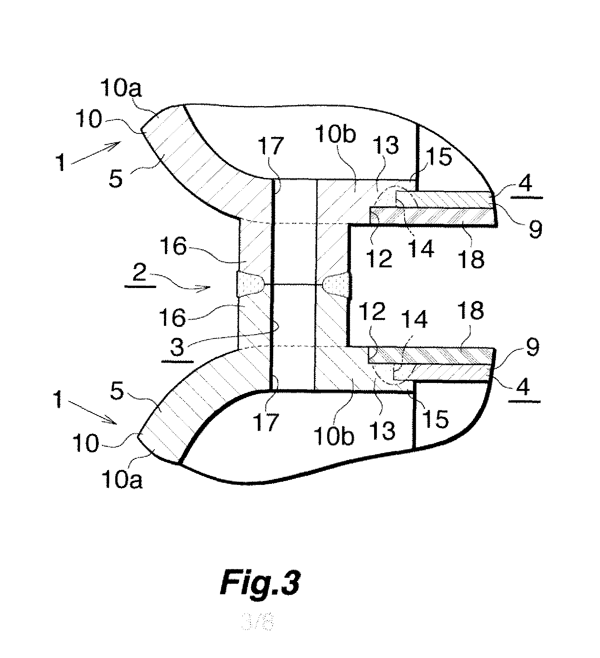

Each of the open end portions of the short, cylindrical portions 10b and 11b of the second and third liner component members 10 and 11 has a first thin-walled portion 13 formed via a stepped portion 12, and an end portion of the first thin-walled portion 13 has a second thin-walled portion 15 formed via a stepped portion 14 (see FIGS. 3 and 4). The inner circumferential surfaces of the first thin-walled portions 13 of the second and third liner component members 10 and 11 are on the same cylindrical surface, and the inner circumferential surfaces of the second thin-walled portions 15 of the second and third liner component members 10 and 11 are on the same cylindrical surface. The stepped portion 14 located between the first and second thin-walled portions 13 and 15 has a height equal to the thickness of the first liner component member 9. Opposite end portions of the first liner component member 9 are fitted onto the respective second thin-walled portions 15 of the short, cylindrical portions 10b and 11b of the second and third liner component members 10 and 11, while the opposite end faces of the first liner component member 9 butt against the respective stepped portions 14. In this condition, the first liner component member 9 and the second and third liner component members 10 and 11 are joined together. The first liner component member 9 and the second and third liner component members 10 and 11 are joined together by, for example, fusion welding, such as MIG or TIG, friction welding, brazing, or friction stir welding.

Two connection-member-forming projections 16 each having a flat end face are integrally formed on the outer circumferential surface of the short, cylindrical portion 10b of the second liner component member 10 of each liner 1 in such a manner as to be located on a single diametral line. As shown in FIG. 3, the second liner component member 10 has a through-hole 17 extending from the inner surface of its short, cylindrical portion 10b to the end face of one connection-member-forming projection 16. While the front end faces of the connection-member-forming projections 16 through which the respective through-holes 17 extend and which are of the second liner component members 10 of the two adjacent liners 1 butt against each other, the connection-member-forming projections 16 are joined together, thereby forming the connection member 2. By this procedure, the through-holes 17 of the two second liner component members 10 establish communication with each other, thereby forming the communication path 3 between the interiors of the two adjacent liners 1. The connection-member-forming projections 16 are also joined together by, for example, fusion welding, such as MIG or TIG, friction welding, brazing, or friction stir welding.

The other connection-member-forming projection 16 of the second liner component member 10 is used when the number of the liners 1 in juxtaposition is to be increased. In this case, in a manner similar to that described above, the through-hole 17 is formed in the second liner component member 10 in such a manner as to extend from the inner surface of the short, cylindrical portion 10b of the second liner component member 10 to the end surface of one connection-member-forming projection 16. The one connection-member-forming projection 16 is joined to the connection-member-forming projection 16 of the second liner component member 10 of an adjacent liner 1, thereby forming the connection member 2 and the communication path 3. Notably, the other connection-member-forming projections 16 of the second liner component members 10 of two liners 1 located at opposite end positions with respect to the front-rear direction are not necessarily required.

The first to third liner component members 9, 10, and 11 are formed from, for example, any one of a JIS A2000-family alloy, a JIS A6000-family alloy, and a JIS A7000-family alloy. The first to third liner component members 9, 10, and 11 may be formed from the same material. Alternatively, at least two of the first to third liner component members 9, 10, and 11 may be formed from different materials.

The outer surface of each liner 1 is covered with a fiber-reinforced resin layer formed from, for example, a carbon-fiber-reinforced resin. The fiber-reinforced resin layer includes a hoop-wound reinforcement layer 18 and a helically-wound reinforcement layer (not shown). The hoop-wound reinforcement layer 18 is formed as follows: reinforcing fiber is wound on the trunk 4 along the circumferential direction; the resultant hoop-wound fiber layer is impregnated with resin; and the resin is allowed to set. The helically-wound reinforcement layer is formed as follows: reinforcing fiber is wound on the liner 1 along the longitudinal direction of the trunk 4 in such a manner as to extend between the two end plates 5; the resultant helically-wound fiber layer is impregnated with resin; and the resin is allowed to set. The hoop-wound reinforcement layer 18 is formed in such a manner as to cover the outer circumferential surface of the first thin-walled portion 13 of the second liner component member 10 and the outer circumferential surface of the first liner component member 9. The hoop-wound reinforcement layer 18 has a thickness equal to the height of the stepped portion 12. Examples of the fiber used to form the reinforcement layers 18 include carbon fiber, glass fiber, and aramid fiber. Carbon fiber is preferred. An example of resin used to form the reinforcement layers 18 is epoxy resin. The reinforcement layers are formed by winding resin-impregnated reinforcing fiber or resin-impregnated reinforcing fiber yarn by a filament winding process and subsequent curing of resin.

As shown in FIG. 4, the pressure vessel is manufactured by the method described below.

First, a predetermined number of the first liner component members 9 are hot-extruded; a predetermined number of the second liner component members 10 each having the thin-walled portions 13 and 15 and the connection-member-forming projections 16 are hot-forged; and a predetermined number of the third liner component members 11 each having the thin-walled portions 13 and 15 are hot-forged (see FIG. 4(a)). At this time, the port portion 6 is simultaneously formed on one of the second liner component members 10.

Next, opposite end portions of each first liner component member 9 are fitted onto the respective second thin-walled portions 15 of the short, cylindrical portions 10b and 11b of the second and third liner component members 10 and 11, while the opposite end faces of the first liner component member 9 butt against the respective stepped portions 14. In this condition, the first liner component member 9 and the second and third liner component members 10 and 11 are joined together, thereby forming the liner 1 (see FIG. 4(b)).

Next, resin-impregnated reinforcing fiber or resin-impregnated reinforcing fiber yarn is wound around the trunk 4 in the circumferential direction of the trunk 4 by a filament winding process, thereby forming the hoop-wound fiber layer. Subsequently, resin-impregnated reinforcing fiber or resin-impregnated reinforcing fiber yarn is wound in the longitudinal direction of the trunk 4 by a filament winding process in such a manner as to extend between the opposite end plates 5, thereby forming the helically-wound fiber layer. Furthermore, the resin is allowed to cure, thereby forming the fiber-reinforced resin layer which includes the hoop-wound reinforcement layer 18 and the helically-wound reinforcement layer.

Next, the through-hole 17 is formed in the second liner component member 10 in such a manner as to extend from the inner surface of the second liner component member 10 to the end face of the connection-member-forming projection 16 which will be located between two adjacent liners 1 when a plurality of the liners 1 are juxtaposed with one another (see FIG. 4(c)).

Subsequently, a predetermined number of the liners 1 are juxtaposed with one another in the front-rear direction such that their axes extend in the left-right direction and lie on the same horizontal plane, while the end faces of the connection-member-forming projections 16 of the second liner component members 10 of two adjacent liners 1 butt against each other. In this condition, the butting connection-member-forming projections 16 are joined together, thereby forming the connection members 2 and establishing communication between the through-holes 17 of the two adjacent liner component members 10 with resultant formation of the communication paths 3. Thus is manufactured the pressure vessel.

The pressure vessel is used as a fuel hydrogen gas storage pressure vessel for use in a fuel cell system, which includes the fuel gas storage pressure vessel, a fuel cell, and pressure piping for sending fuel hydrogen gas therethrough from the fuel hydrogen gas storage pressure vessel to the fuel cell. The fuel cell system is mounted in a fuel cell vehicle. The fuel cell system is also used in a cogeneration system.

The pressure vessel is used as a natural gas storage pressure vessel for use in a natural gas supply system, which includes the natural gas storage pressure vessel, and pressure piping for delivering natural gas therethrough from the natural gas storage pressure vessel. The natural gas supply system, together with a generator and a generator drive apparatus, is used in a cogeneration system. The natural gas supply system is used in a natural gas vehicle equipped with a natural-gas-fueled engine.

Furthermore, the pressure vessel is used as an oxygen gas storage pressure vessel for use in an oxygen gas supply system, which includes the oxygen gas storage pressure vessel, and pressure piping for delivering oxygen gas therethrough from the oxygen gas storage pressure vessel.

In FIGS. 1 and 2 showing the pressure vessel of Embodiment 1 described above, the number of the liners 1 is two. However, the present invention is not limited thereto. The pressure vessel may be configured as follows. Three or more liners 1 are juxtaposed with one another in the front-rear direction such that their axes extend in the left-right direction and lie on the same horizontal plane; two adjacent liners 1 are integrally connected together via the connection member 2 provided therebetween; the interiors of the two adjacent liners 1 integrally connected together via the connection member 2 communicate with each other via the communication path 3 formed in the liners 1 and in the connection member 2; and all the liners 1 collectively form a single closed space.

### Embodiment 2

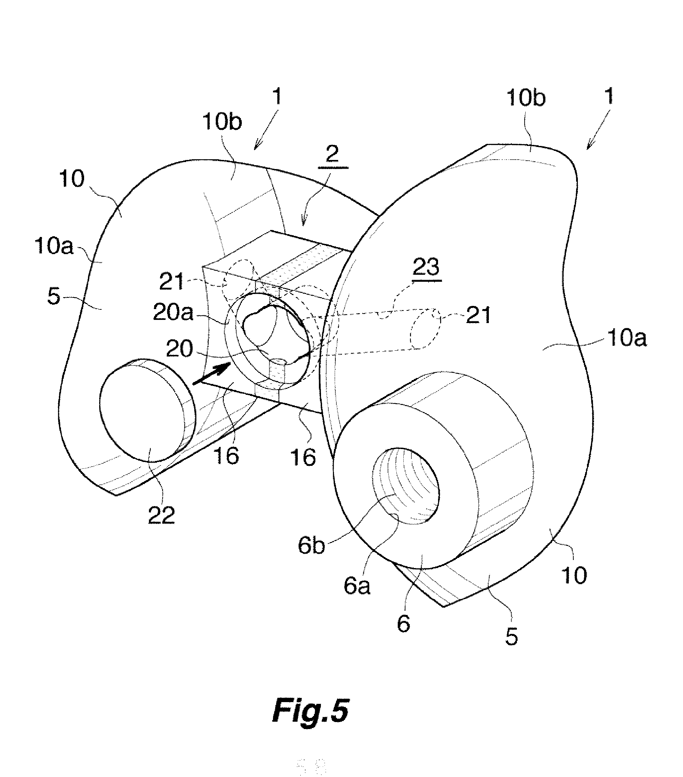

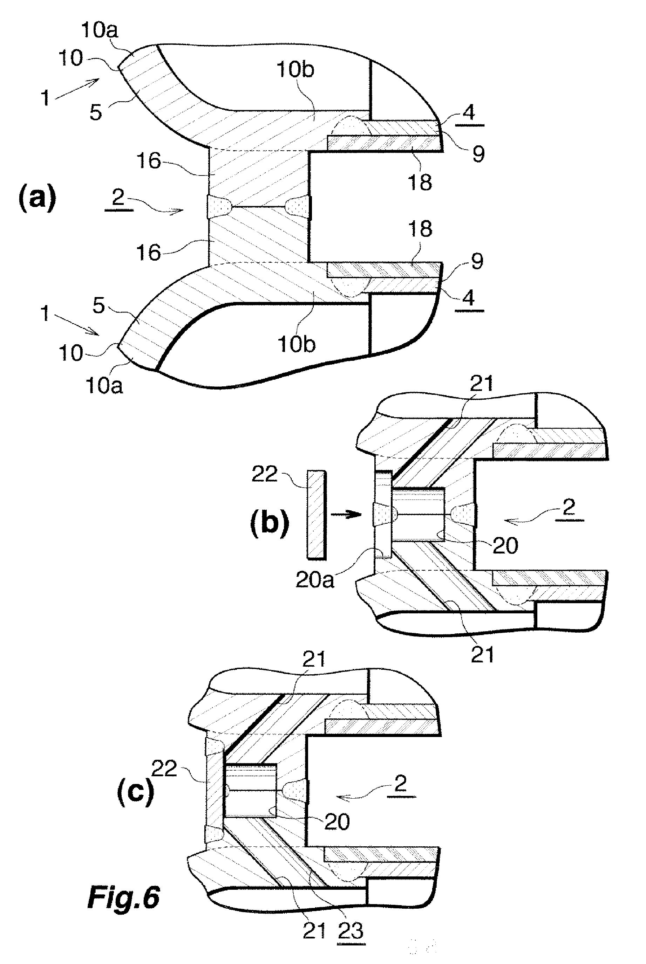

The present embodiment is shown in FIGS. 5 and 6.

The pressure vessel of Embodiment 2 is configured in a manner similar to that of Embodiment 1 except for the structure of a communication path for establishing communication between the interiors of the adjacent liners 1.

As shown in FIG. 5, a stepped, closed-bottomed hole 20 is formed in the side surface of the connection member 2, which is formed of the connection-member-forming projections 16 of the second liner component members 10 of two adjacent liners 1, in such a manner as to extend into both of the connection-member-forming projections 16. The second liner component members 10 of the two adjacent liners 1 have respective through-holes 21 extending from their inner surfaces to the wall surface of the closed-bottomed hole 20. A cover 22 made of aluminum is fitted into a large-diameter portion 20a of the closed-bottomed hole 20 which is located on a side toward the opening of the closed-bottomed hole 20, and is joined to the connection member 2 so as to close the opening of the closed-bottomed hole 20. This joining is performed by, for example, fusion welding, such as MIG or TIG, friction welding, brazing, or friction stir welding. The closed-bottomed hole 20 of the connection member 2 and the through-holes 21 of the two adjacent liners 1 form the communication path 23, which establishes communication between the interiors of the adjacent liners 1.

A pressure vessel of Embodiment 2 is manufactured as shown in FIG. 6 by a method described below.

Steps until formation of the fiber-reinforced resin layer are similar to those of the method of manufacturing the pressure vessel of Embodiment 1.

A predetermined number of the liners 1 having the respective fiber-reinforced resin layers formed thereon are juxtaposed with one another in the front-rear direction such that their axes extend in the left-right direction and lie on the same horizontal plane, while the end faces of the connection-member-forming projections 16 of the second liner component members 10 of two adjacent liners 1 butt against each other. In this condition, the butting connection-member-forming projections 16 are joined together, thereby forming the connection members 2 (see FIG. 6(a)).

Next, the stepped, closed-bottomed hole 20 is formed in the side surface of each connection member 2 in such a manner as to extend into both of the connection-member-forming projections 16. Subsequently, the through-holes 21 are formed, from the opening of the closed-bottomed hole 20, in the second liner component members 10 of the two adjacent liners 1 in such a manner as to extend from the wall surface of the closed-bottomed hole 20 to the respective inner surfaces of the short, cylindrical portions 10b of the second liner component members 10 (see FIG. 6(b)).

Subsequently, the cover 22 made of aluminum is fitted into the large-diameter portion 20a of the closed-bottomed hole 20 which is located on the side toward the opening of the closed-bottomed hole 20, and a circumferential portion of the cover 22 is joined to the connection member 2 so as to close the opening of the closed-bottomed hole 20. The closed-bottomed hole 20 of the connection member 2 and the through-holes 21 of the second liner component members 10 form the communication path 23 (see FIG. 6(c)). Thus is manufactured the pressure vessel.

In the pressure vessels of Embodiments 1 and 2, the connection member 2 which integrally connects the two adjacent liners 1 together is formed by joining together the connection-member-forming projections 16 which are integrally formed on the respective second liner component portions 10 of the two adjacent liners 1. However, the present invention is not limited thereto. Specifically, the connection member 2 may be formed such that a connection-member-forming projection provided on the second liner component member 10 of one of the two adjacent liners 1 is joined to the second liner component member 10 of the other liner 1.

In the case where the connection member 2 is formed of a connection-member-forming projection provided on one of the two second liner component members 10, a communication path is formed as described below.

A through-hole is formed in the second liner component member 10 of one of the two adjacent liners 1 which has a connection-member-forming projection, in such a manner as to extend from the inner surface of the second liner component member 10 to the end face of the connection-member-forming projection; a through-hole is formed in the second liner component member 10 which does not have a connection-member-forming projection, in such a manner as to extend from the inner surface to the outer surface of the second liner component member 10; and communication is established between the through-holes of the two second liner component members 10, thereby forming the communication path.

The stepped, closed-bottomed hole 20 is formed in the side surface of the connection member 2; a first through-hole and a second through-hole are formed in the second liner component member 10 of one of the two adjacent liners 1 which has a connection-member-forming projection, such that the first through-hole extends from the inner surface of the second liner component member 10 to the wall surface of the closed-bottomed hole 20 and such that the second through-hole extends from the end face of the connection-member-forming projection to the wall surface of the closed-bottomed hole 20; a third through-hole is formed in the second liner component member 10 which does not have a connection-member-forming projection, in such a manner as to extend from the inner surface to the outer surface of the second liner component member 10; the cover 22 made of aluminum is fitted into the large-diameter portion 20a of the closed-bottomed hole 20 which is located on the side toward the opening of the closed-bottomed hole 20, and is joined to the connection member 2 so as to close the opening of the closed-bottomed hole 20; and communication is established between the second and the third through-holes, whereby the communication path is formed by the closed-bottomed hole 20 of the connection member 2, the first and second through-holes of one of the two second liner component members 10, and the third through-hole of the other second liner component member 10.

### Embodiment 3

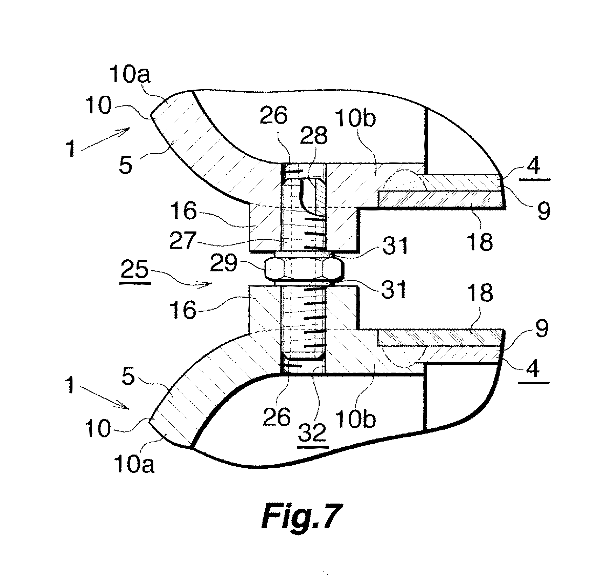

The present embodiment is shown in FIG. 7.

The pressure vessel of Embodiment 3 is configured in a manner similar to that of Embodiment 1 except for a connection member for integrally connecting two adjacent liners 1 and the structure of a communication path for establishing communication between the interiors of the two adjacent liners 1.

As shown in FIG. 7, the connection-member-forming projections 16 of the second liner component members 10 of the two adjacent liners 1 are joined together by threadingly-engaging means, thereby forming the connection member 25.

Specifically, the second liner component members 10 of the two adjacent liners 1 have respective threaded holes 26, each assuming a through-hole form, extending from the inner surfaces of the second liner component members 10 to the ends of the connection-member-forming projections 16; an externally threaded member 27 assuming a rodlike form and having a through-hole 28 extending axially is threadingly engaged with the threaded holes 26. The threaded hole 26 of one liner 1 and the threaded hole 26 of the other liner 1 differ in helical direction of threading. The externally threaded member 27 has an outward flange 29 integrally formed at its longitudinally central portion and having a polygonal; herein, hexagonal, outline. The externally threaded member 27 has external threads on opposite sides of the outward flange 29. Portions of the externally threaded member 27 which are located on opposite sides of the outward flange 29 differ in helical direction of threading. The portion of the externally threaded member 27 which is located on one side of the outward flange 29 is threadingly engaged with the threaded hole 26 of the connection-member-forming protrusion 16 of the one second liner component member 10, whereas the other portion of the externally threaded member 27 which is located on the other side of the outward flange 29 is threadingly engaged with the threaded hole 26 of the connection-member-forming protrusion 16 of the other second liner component member 10. Respective seal members 31 intervene between opposite faces of the outward flange 29 and the ends of the connection-member-forming projections 16 of the two second liner component members 10. The threaded holes 26 of the two second liner component members 10 and the through-hole 28 of the externally threaded member 27 collectively form a communication path 32, which establishes communication between the interiors of the adjacent liners 1.

In Embodiments 1 to 3 described above, the first to third liner component members 9, 10, 11 of the liner 1 is made of aluminum. However, the present invention is not limited thereto. The first to third liner component members may be made of a synthetic resin. In this case, the first liner component member and the second and third liner component members are joined together by welding or bonding. Also, the connection-member-forming projections are joined together by welding or bonding.

In Embodiments 1 to 3 described above, the liner 1 is formed by joining the first liner component member 9 and the second and third liner component members 10 and 11 together. However, the present invention is not limited thereto. The liner 1 may be formed as follows: a one-piece liner component member consisting of the first liner component member 9 and one of the second liner component member 10 and the third liner component member 11 is joined to the other one of the second liner component member 10 and the third liner component member 11.

In Embodiments 1 to 3 described above, the second liner component members 10 of two adjacent liners 1 are integrally connected together via the connection member 2. However, the present invention is not limited thereto. The third liner component members 11 may also be integrally connected together via the connection member 2. This connection member 2 and the liners 1 may have or may not have the communication path 3 for establishing communication between the interiors of the two adjacent liners 1.

Furthermore, in Embodiments 1 to 3 described above, two connection-member-forming projections 16 are integrally formed on the outer circumferential surface of the short, cylindrical portion 10b of the second liner component member 10 of each liner 1 in such a manner as to be located on a single diametral line. However, the present invention is not limited thereto. The position and the number of the connection-member-forming projections 16 can be modified as appropriate. That is, the position and the number of the connection-member-forming projections 16 can be modified according to the arrangement of the liners 1.

FIG. 8 shows modified pressure vessels in which the liners 1 whose axes extend in the left-right direction are arranged such that the axes of not all the liners 1 lie on the same horizontal plane.

In the pressure vessel shown in FIG. 8(a), a plurality of; herein, two, liners 1 are juxtaposed with each other in the front-rear direction, and a single liner 1 is disposed above and in juxtaposition with at least one of the two liners 1; herein, the front liner 1. As in the case of Embodiments 1 to 3, the two horizontally adjacent liners 1 are integrally connected together via the connection member 2 (25) provided therebetween, and the two vertically adjacent liners 1 are integrally connected together via the connection member 2 (25) provided therebetween. Thus, the interiors of the two liners 1 which are integrally connected together via the connection member 2 (25) communicate with each other via the communication path 3 (23 or 32) formed in the liners 1 and in the connection member 2 (25). All the liners 1 collectively form a single closed space.

In the pressure vessel shown in FIG. 8(a), the second liner component member 10 of each liner 1 has the connection-member-forming projections 16 located on two orthogonal, diametral lines. However, the connection-member-forming projections 16 which are not used to form the connection member 2 (25) do not have a through-hole for forming the communication path 3 (23 or 32). When another liner 1 is to be juxtaposed with any one of the liners 1 in at least one of the vertical direction and the front-rear direction, the relevant connection-member-forming projections 16 are used to form the connection member 2 (25), and the communication path 3 (23 or 32) is formed in the relevant liners 1 and in the relevant connection member 2 (25).

In the case of the pressure vessel shown in FIG. 8(b), the liners 1 are arranged in a manner similar to that of the pressure vessel of FIG. 8(a). The second liner component members 10 of the liners 1 have only those connection-member-forming projections 16 which are required to form the connection members 2 (25) for integrally connecting two adjacent liners 1 together.

In the case of the pressure vessel shown in FIG. 8(c), a plurality of; herein, three, liners 1 are juxtaposed with each other in the front-rear direction, and the respective liners 1 are disposed above and in juxtaposition with at least two of the three liners 1; herein, the two front liners 1. As in the case of Embodiments 1 to 3, the two horizontally adjacent liners 1 are integrally connected together via the connection member 2 (25) provided therebetween, and the two vertically adjacent liners 1 are integrally connected together via the connection member 2 (25) provided therebetween. Thus, the interiors of the two liners 1 which are integrally connected together via the connection member 2 (25) communicate with each other via the communication path 3 (23 or 32) formed in the liners 1 and in the connection member 2 (25). All the liners 1 collectively form a single closed space.

In the pressure vessel shown in FIG. 8(c), the second liner component member 10 of each liner 1 has the connection-member-forming projections 16 located on two orthogonal, diametral lines. However, the connection-member-forming projections 16 which are not used to form the connection member 2 (25) do not have a through-hole for forming the communication path 3 (23 or 32). When another liner 1 is to be juxtaposed with any one of the liners 1 in at least one of the vertical direction and the front-rear direction, the relevant connection-member-forming projections 16 are used to form the connection member 2 (25), and the communication path 3 (23 or 32) is formed in the relevant liners 1 and in the relevant connection member 2 (25).

In the case of the pressure vessel shown in FIG. 8(d), the liners 1 are arranged in a manner similar to that of the pressure vessel of FIG. 8(c). The second liner component members 10 of the liners 1 have only those connection-member-forming projections 16 which are required to form the connection members 2 (25) for integrally connecting two adjacent liners 1 together.

In the case of the pressure vessel shown in FIG. 8(e), a plurality of liners 1 are juxtaposed with one another in the front-rear direction, and a plurality of the liners 1 are juxtaposed with one another in such a manner as to extend frontward from the front liner 1 in an obliquely upward direction. The number of the liners 1 horizontally arranged and the number of the liners 1 arranged in such a manner as to extend frontward in an obliquely upward can be modified as appropriate. As in the case of Embodiments 1 to 3, the two horizontally adjacent liners 1 are integrally connected together via the connection member 2 (25) provided therebetween, and the two obliquely adjacent liners 1 are integrally connected together via the connection member 2 (25) provided therebetween. Thus, the interiors of the two liners 1 which are integrally connected together via the connection member 2 (25) communicate with each other via the communication path 3 (23 or 32) formed in the liners 1 and in the connection member 2 (25). All the liners 1 collectively form a single closed space.

In the pressure vessel shown in FIG. 8(e), the second liner component member 10 of each liner 1 has the connection-member-forming projections 16 located on four diametral lines which are spaced at equal-angle intervals. However, the connection-member-forming projections 16 which are not used to form the connection member 2 (25) do not have a through-hole for forming the communication path 3 (23 or 32). When another liner 1 is to be juxtaposed with any one of the liners 1 in at least one of the front-rear direction, the vertical direction, and an oblique direction, the relevant connection-member-forming projections 16 are used to form the connection member 2 (25), and the communication path 3 (23 or 32) is formed in the relevant liners 1 and in the relevant connection member 2 (25).

In the case of the pressure vessel shown in FIG. 8(f), the liners 1 are arranged in a manner similar to that of the pressure vessel of FIG. 8(e). The second liner component members 10 of the liners 1 have only those connection-member-forming projections 16 which are required to form the connection members 2 (25) for integrally connecting two adjacent liners 1 together.

Applications of the pressure vessels of Embodiments 2 and 3 described above and those of the pressure vessels shown in FIG. 8 are similar to those of the pressure vessel of Embodiment 1 described above.

In the above description, the trunk of the liner 1 assumes a cylindrical shape. However, the present invention is not limited thereto. The trunk may assume, for example, an elliptic cross section.

The above-described pressure vessels contain gas, liquid, or gas-liquid mixture.

### BRIEF DESCRIPTION OF THE DRAWINGS

[FIG. 1] Perspective, partially cutaway view showing a pressure vessel of Embodiment 1 of the present invention.
[FIG. 2] Horizontally sectional view of the pressure vessel of Embodiment 1.
[FIG. 3] Enlarged view of essential portions of FIG. 2.
[FIG. 4] Perspective views showing a method of manufacturing the pressure vessel of Embodiment 1.
[FIG. 5] Exploded perspective view showing, on an enlarged scale, a portion of a pressure vessel of Embodiment 2.
[FIG. 6] Partially enlarged sectional views showing a method of manufacturing the pressure vessel of Embodiment 2.
[FIG. 7] Sectional view showing, on an enlarged scale, a portion of a pressure vessel of Embodiment 3.
[FIG. 8] Views showing modified pressure vessels in which liners having the same length are arranged such that the axes of not all the liners lie on the same horizontal plane.

## Claims

1. A pressure vessel comprising a plurality of liners juxtaposed with one another, each liner comprising a tubular trunk, and end plates for closing opposite end openings of the tubular trunk, two adjacent liners being integrally connected together via a connection member provided therebetween, interiors of the two adjacent liners integrally connected together via the connection member communicating with each other via a communication path formed in the liners and in the connection member.

2. A pressure vessel according to claim 1, wherein ends of connection-member-forming projections provided respectively on the two adjacent liners are butt-joined together, thereby forming the connection member.

3. A pressure vessel according to claim 2, wherein the two adjacent liners have respective through-holes extending from inner surfaces of the two adjacent liners to the ends of the connection-member-forming projections, and the through-holes of the two adjacent liners establish communication therebetween, thereby forming the communication path.

4. A pressure vessel according to claim 2, wherein a closed-bottomed hole is formed in a side surface of the connection member in such a manner as to extend into both of the connection-member-forming projections; the two adjacent liners have respective through-holes extending from inner surfaces of the two adjacent liners to a wall surface of the closed-bottomed hole; a cover is joined to the connection member so as to close an opening of the closed-bottomed hole; and the closed-bottomed hole of the connection member and the through-holes of the two adjacent liners form the communication path.

5. A pressure vessel according to claim 1, wherein a connection-member-forming projection provided on one of the two adjacent liners is joined to the other liner, thereby forming the connection member.

6. A pressure vessel according to claim 5, wherein the one liner has a through-hole extending from an inner surface of the one liner to an end of the connection-member-forming projection; the other liner has a through-hole extending from an inner surface of the other liner to an outer surface of the other liner; and the through-holes of the two adjacent liners establish communication therebetween, thereby forming the communication path.

7. A pressure vessel according to claim 5, wherein a closed-bottomed hole is formed in a side surface of the connection member; the one liner has a first through-hole extending from an inner surface of the one liner to a wall surface of the closed-bottomed hole and a second through-hole extending from an end of the connection-member-forming projection to the wall surface of the closed-bottomed hole; the other liner has a third through-hole extending from an inner surface of the other liner to an outer surface of the other liner; a cover is joined to the connection member so as to close an opening of the closed-bottomed hole; the second and third through-holes establish communication therebetween; and the closed-bottomed hole of the connection member, the first and second through-holes of the one liner, and the third through-hole of the other liner form the communication path.

8. A pressure vessel according to claim 1, wherein connection-member-forming projections provided respectively on the two adjacent liners are joined together by threadingly-engaging means, thereby forming the connection member.

9. A pressure vessel according to claim 8, wherein the two adjacent liners have respective threaded holes, each assuming a through-hole form, extending from inner surfaces of the two adjacent liners to ends of the connection-member-forming projections; an externally threaded member assuming a rodlike form and having a through-hole extending axially is threadingly engaged with the threaded holes; the threaded holes of the two adjacent liners and the through-hole of the externally threaded member form the communication path; and the connection-member-forming projections of the two adjacent liners and the externally threaded member are sealed against each other.

10. A pressure vessel according to claim 9, wherein the threaded hole of one liner and the threaded hole of the other liner differ in helical direction of threading; the externally threaded member has an outward flange at its longitudinally central portion; portions of the externally threaded member which are located on opposite sides of the outward flange differ in helical direction of threading; the portion of the externally threaded member which is located on one side of the outward flange is threadingly engaged with the threaded hole of the one liner, whereas the other portion of the externally threaded member which is located on the other side of the outward flange is threadingly engaged with the threaded hole of the other liner; and respective seal members intervene between opposite faces of the outward flange and the ends of the connection-member-forming projections of the two adjacent liners.

11. A pressure vessel according to claim 1, wherein all the liners collectively form a single closed space, and a single port portion is provided for establishing communication between the closed space and the exterior of the closed space.

12. A fuel cell system comprising a fuel hydrogen gas storage pressure vessel, a fuel cell, and pressure piping for sending fuel hydrogen gas therethrough to the fuel cell from the fuel hydrogen gas storage pressure vessel, the fuel hydrogen gas storage pressure vessel comprising the pressure vessel according to claim 1.

13. A fuel cell vehicle carrying the fuel cell system according to claim 12.

14. A cogeneration system comprising the fuel cell system according to claim 12.

15. A natural gas supply system comprising a natural gas storage pressure vessel, and pressure piping for delivering natural gas therethrough from the natural gas storage pressure vessel, the natural gas storage pressure vessel comprising the pressure vessel according to claim 1.

16. A cogeneration system comprising the natural gas supply system according to claim 15, a generator, and a generator drive apparatus.

17. A natural gas vehicle comprising the natural gas supply system according to claim 15 and a natural-gas-fueled engine.

18. An oxygen gas supply system comprising an oxygen gas storage pressure vessel, and pressure piping for delivering oxygen gas therethrough from the oxygen gas storage pressure vessel, the oxygen gas storage pressure vessel comprising the pressure vessel according to claim 1.
